(19) Europäisches Patentamt / European Patent Office / Office européen des brevets

(11) **EP 2 924 228 B1**

(12) **EUROPEAN PATENT SPECIFICATION**

(45) Date of publication and mention
of the grant of the patent:
**24.10.2018 Bulletin 2018/43**

(51) Int Cl.:
*E06B 9/24* *(2006.01)*       *B29C 59/04* *(2006.01)*
*G02B 5/00* *(2006.01)*

(21) Application number: **13857587.3**

(22) Date of filing: **19.11.2013**

(86) International application number:
**PCT/JP2013/081172**

(87) International publication number:
**WO 2014/080910 (30.05.2014 Gazette 2014/22)**

(54) **LIGHT-MODULATING MEMBER**

LICHTMODULIERENDES ELEMENT

ÉLÉMENT MODULATEUR DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2012  JP 2012253935**

(43) Date of publication of application:
**30.09.2015  Bulletin 2015/40**

(73) Proprietors:
• **Sumitomo Chemical Company Limited
Tokyo 104-8260 (JP)**
• **National Institute of Advanced Industrial Science
and Technology
Tokyo 100-8921 (JP)**

(72) Inventors:
• **MINO, Takayuki
Niihama-shi
Ehime 792-8521 (JP)**
• **AKADA, Katsumi
Niihama-shi
Ehime 792-8521 (JP)**
• **NOZUE, Yoshinobu
Tokyo 104-8260 (JP)**
• **YOSHIMURA, Kazuki
Nagoya-shi,
Aichi 463-8560 (JP)**

(74) Representative: **J A Kemp
14 South Square
Gray's Inn
London WC1R 5JJ (GB)**

(56) References cited:
WO-A1-2011/096595       JP-A- S54 106 250
JP-A- S54 106 250       JP-A- 2010 246 748
JP-A- 2010 246 748       JP-A- 2011 042 152
JP-A- 2011 042 152       JP-A- 2011 058 349
JP-A- 2011 058 349       US-A1- 2011 043 919

**Description**

The present invention relates to a light-modulating member and a shaped resin sheet used in the light-modulating member. More particularly the light-modulating member restrains incidence of sunlight into a room in summer and does not restrain incidence of sunlight into a room in winter.

JP 2011-94471 A1 discloses, as a member for window which shields incidence of sunlight into a room in summer and does not shield incidence of sunlight into a room in winter, a light-modulating member in which, in a member made of a sheet-like material having a pair of parallel planes, an air layer composed of a planar-shaped slit having a certain thickness is formed in a state of being inclined to the planes of the pair of parallel planes.

The light-modulating member disclosed in JP 2011-94471 A shields incidence of sunlight into a room in summer and does not shield incidence of sunlight into a room in winter, thus resulting in making it possible to reduce the use of indoor air conditioning, leading to contribution to a reduction in energy consumption.

WO 2011/096595 A1 discloses an optical body and a method for manufacturing an optical body. JP 2011-042152 A discloses a method for manufacturing a resin sheet for surface shape transfer. JP 2011-058349 A discloses a member for controlling a transparent window. JP 2010-246748 A discloses an angle selectable light shielding sheet. US 2011/043919 A1 discloses a light guiding film.

It is desired that a light-modulating member restrains incidence of sunlight into a room in summer and does not restrain incidence of sunlight into a room in winter, and is also easily used as a member for window.

An aim of the present invention is to provide a light-modulating member which restrains incidence of sunlight into a room in summer and does not restrain incidence of sunlight into a room in winter, and is also easily used as a member for window.

According to the present invention, there is provided a light-modulating member and a method for producing a shaped resin sheet used in the light-modulating member as defined in the independent claims. Optional features are defined in the dependent claims.

The light-modulating member of the present invention restrains incidence of sunlight into a room in summer and does not restrain incidence of sunlight into a room in winter, and is also easily used as a member for window.

Fig. 1 is a schematic view of a shaped resin sheet according to one embodiment of the present invention.
Fig. 2 is a schematic view of a shaped resin sheet according to other embodiment of the present invention.
Fig. 3 is a schematic view of a light-modulating member according to one embodiment of the present invention.
Fig. 4 is a schematic view of a light-modulating member according to other embodiment of the present invention.
Fig. 5 is an outline schematic view of a production apparatus used in a method for producing a shaped resin sheet according to one embodiment of the present invention.

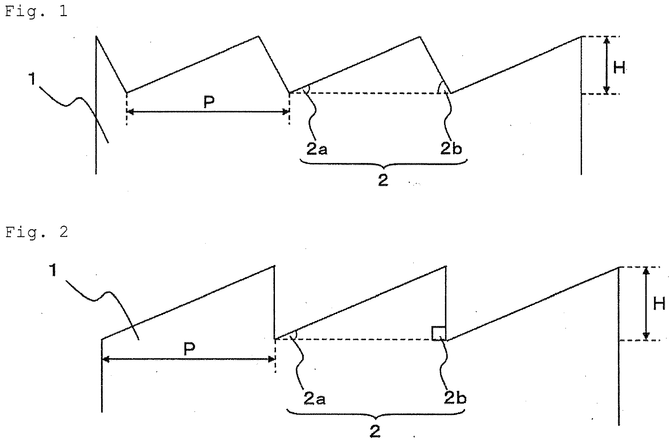

The light-modulating member of the present invention has one or plural shaped resin sheets having projections on one surface, wherein the projection has a height of from 1 μm or more through 1 cm or less and a pitch interval of from 10 μm or more through 10 cm or less. In other words, the light-modulating member of the present invention has one predetermined shaped resin sheet, or two or more predetermined shaped resin sheets. The light-modulating member having two or more predetermined shaped resin sheets is preferably a pair of predetermined shaped resin sheets via an air layer and the surface having a projection faces each other. A schematic view of a cross-sectional shape of a shaped resin sheet 1 according to one embodiment of the present invention is shown in Fig. 1. A schematic view of a cross-sectional shape of a shaped resin sheet 1 according to other embodiment of the present invention is shown in Fig. 2.

<Shaped Resin Sheet>

A shaped resin sheet in the light-modulating member of the present invention is a resin sheet having a projection on one surface and is obtained by, for example, melt extrusion molding of a resin. The shaped resin sheet is also obtained by, in addition to melt extrusion molding of a resin, cutting, press molding, injection molding, or cast polymerization of a resin. The shaped resin sheet preferably has projections formed continuously on one surface. The surface opposite to the surface having a projection is usually a plane.

The resin can be a resin which may undergo melt extrusion molding, and usually includes a thermoplastic resin which is heated into a molten state. Examples of the thermoplastic resin include a styrene-based resin, an acrylic resin, a polyethylene resin, a polypropylene resin, a cyclic olefin polymer resin, an acylonitrile-butadiene-styrene (ABS) resin, a polyethylene terephthalate (PET) resin, a polycarbonate (PC) resin, and the like. Of these resins, an acrylic resin is preferable because of its excellent transparency and weatherability.

Examples of the acrylic resin include, but are not particularly limited to, homopolymers or two or more copolymers of acrylic monomers such as (meth)acrylic acid, (meth)acrylic acid ester, and (meth)acrylonitrile; copolymers of acrylic monomers with other monomers; and the like. As used herein, the term "(meth)acryl" means "acryl" or "methacryl".

A methacrylic resin is preferably used as the acrylic resin because of having excellent hardness, weatherability, transparency, and the like. The methacrylic resin is a polymer obtained by polymerizing a monomer composed mainly of a methacrylic acid ester, and examples thereof include a homopolymer of a methacrylic acid ester (polyalkyl methacrylate), a copolymer of 50% by weight or more of a methacrylic acid ester with 50% by weight or less of a monomer other than the methacrylic acid ester, and the like. When the methacrylic resin is a copolymer, preferably, the amount of the methacrylic acid ester is 70% by weight or more and the amount of the other monomer is 30% by weight or less, and more preferably, the amount of the methacrylic acid ester is 90% by weight or more and the amount of the other monomer is 10% by weight or less, based on the total amount of the monomer.

Examples of the methacrylic acid ester include alkyl methacrylates such as methyl methacrylate, ethyl methacrylate, n-propyl methacrylate, isopropyl methacrylate, n-butyl methacrylate, isobutyl methacrylate, hexyl methacrylate, heptyl methacrylate, 2-ethylhexyl methacrylate, n-octyl methacrylate, n-nonyl methacrylate, isononyl methacrylate, decyl methacrylate, undecyl methacrylate, n-amylmethacrylate, isoamyl methacrylate, lauryl methacrylate, methoxyethyl methacrylate, and ethoxyethyl methacrylate. Of these, a methacrylic acid ester having an alkyl group with a carbon number of 1 to 8 is preferable, and methyl methacrylate is more preferable. The methacrylic acid ester may be used alone (homopolymer), or two or more thereof may be used in combination (copolymer).

Examples of the monomer other than the methacrylic acid ester include an acrylic acid ester, an unsaturated nitrile, an ethylenically unsaturated carboxylic acid hydroxyalkyl ester, an ethylenically unsaturated carboxylic acid amide, an ethylenically unsaturated acid, an ethylenically unsaturated sulfonic acid ester, an ethylenically unsaturated alcohol and an ester thereof, an ethylenically unsaturated ether, an ethylenically unsaturated amine, an ethylenically unsaturated silane compound, an aliphatic conjugated diene, and the like. Of these, an acrylic acid ester is preferable. The monomer other than the methacrylic acid ester may be used alone, or two or more thereof may be used in combination.

Examples of the acrylic acid ester include alkyl acrylates such as methyl acrylate, ethyl acrylate, n-propyl acrylate, isopropyl acrylate, n-butyl acrylate, isobutyl acrylate, hexyl acrylate, heptyl acrylate, 2-ethylhexyl acrylate, n-octyl acrylate, n-nonyl acrylate, isononyl acrylate, decyl acrylate, undecyl acrylate, n-amyl acrylate, isoamyl acrylate, lauryl acrylate, methoxyethyl acrylate, and ethoxyethyl acrylate. Of these, an acrylic acid ester having an alkyl group with a carbon number of 1 to 8 is preferable, and methyl acrylate is more preferable.

Examples of the unsaturated nitrile include acrylonitrile, $\alpha$-chloroacrylonitrile, $\alpha$-methoxyacrylonitrile, methacrylonitrile, vinylindene cyanide, and the like.

Examples of the ethylenically unsaturated carboxylic acid hydroxyalkyl ester include hydroxyethyl acrylate, hydroxyethyl methacrylate, hydroxypropyl acrylate, hydroxypropyl methacrylate, hydroxybutyl acrylate, hydroxybutyl methacrylate, and the like.

Examples of the ethylenically unsaturated carboxylic acid amide include acrylamide, methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-n-propioxymethylacrylamide, N-n-propioxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, and the like.

Examples of the ethylenically unsaturated acid include ethylenically unsaturated carboxylic acids and ethylenically unsaturated sulfonic acids, such as acrylic acid, methacrylic acid, itaconic acid, fumaric acid, fumaric anhydride, maleic acid, maleic anhydride, vinylsulfonic acid, and isoprenesulfonic acid. The ethylenically unsaturated acid monomer may be neutralized with alkali metals such as sodium and potassium, and ammonia.

Examples of the ethylenically unsaturated sulfonic acid ester include an alkyl vinylsulfonate, an alkyl isoprenesulfonate, and the like.

Examples of the ethylenically unsaturated alcohol and ester thereof include allyl alcohol, methallyl alcohol, vinyl acetate, vinyl propionate, vinyl lactate, vinyl stearate, vinyl benzoate, allyl acetate, methallyl caproate, allyl laurate, allyl benzoate, vinyl alkyl sulfonate, allyl alkyl sulfonate, vinyl aryl sulfonate, and the like.

Examples of the ethylenically unsaturated ether include methyl vinyl ether, ethyl vinyl ether, n-propyl vinyl ether, isopropyl vinyl ether, methyl allyl ether, ethyl allyl ether, and the like.

Examples of the ethylenically unsaturated amine include vinyldimethylamine, vinyldiethylamine, vinyldiphenylamine, allyldimethylamine, methallyldiethylamine, and the like.

Examples of the ethylenically unsaturated silane compound include vinyltriethylsilane, methylvinyldichlorosilane, dimethylallylchlorosilane, vinyltrichlorosilane, and the like.

Examples of the aliphatic conjugated diene include 1,3-butadiene, 2-methyl-1,3-butadiene, 2,3-dimethyl-1,3-butadiene, 2-neopentyl-1,3-butadiene, 2-chloro-1,3-butadiene, 1,2dichloro-1,3-butadiene, 2,3-dichloro-1,3-butadiene, 2-bromo-1,3-butadiene, 2-cyano-1,3-butadiene, substituted straight-chain conjugated pentadienes, straight-chain and side-chain conjugated hexadienes, and the like.

Of these acrylic resins, a homopolymer of methyl methacrylate (polymethyl methacrylate), or a copolymer of 50% by weight or more and 99.9% by weight or less of methyl methacrylate with 0.1% by weight or more and 50% by weight or less of a (meth)acrylic acid ester other than methyl methacrylate is particularly preferable.

The copolymer of 50% by weight or more and 99.9% by weight or less of methyl methacrylate with 0.1% by weight or more and 50% by weight or less of a (meth)acrylic acid ester other than methyl methacrylate is a copolymer obtained by polymerizing a monomer mixture containing 50% by weight or more and 99.9% by weight or less of methyl methacrylate and 0.1% by weight or more and 50% by weight or less of a (meth) acrylic acid ester other than methyl methacrylate, based on the total amount of methyl methacrylate and the (meth)acrylic acid ester. This monomer mixture preferably contains 70% by weight or more and 99.9% by weight or less, and more preferably 90% by weight or more and 99.9% by weight or less, of methyl methacrylate.

The acrylic resin is obtained by polymerizing the monomer using a polymerization method such as ,for example, an emulsion polymerization method, a suspension polymerization method, a bulk polymerization method, a cast polymerization method. The polymerization is performed, for example, by photoirradiation or using a polymerization initiator. It is preferred to use polymerization initiators such as azo-based initiators (e.g. 2,2'-azobisisobutyronitrile, 2,2'-azobis(2,4-dimethylvaleronitrile), etc.), peroxide-based initiators (lauroyl peroxide, benzoyl peroxide, etc.), and redox-based initiators using an organic peroxide in combination with amines. The polymerization initiator is used in the proportion of usually 0.01 part by weight or more and 1 part by weight or less, and preferably 0.01 part by weight or more and 0.5 part by weight or less, based on 100 parts by weight of the monomer composing the acrylic resin. It may also be possible to add a chain transfer agent (straight-chain or branched alkyl mercaptan compound such as methyl mercaptan, n-butyl mercaptan, or t-butyl mercaptan) and a crosslinking agent, for controlling a molecular weight.

The shaped resin sheet may be produced by using a resin alone, or using two or more thereof in combination. For example, the acrylic resins may be used alone, or the acrylic resins may be used in combination with other resin. The said other resin may be either an acrylic resin in which the composition of a monomer is different from that of the acrylic resin, or a resin such as polystyrene which is a different type of a resin. To the acrylic resin and the said other resin, commonly used various additives may be added as long as the effects of the present invention are not impaired. Examples of the additive include stabilizers, antioxidants, ultraviolet absorbers, photostabilizers, colorants, blowing agents, lubricants, mold release agents, antistatic agents, flame retardants, polymerization inhibitors, auxiliary flame retardants, reinforcers, and the like. These additives may be used alone, or two or more thereof may be used in combination.

When the additive is added, the content thereof is preferably 0.005% by weight or more and 30% by weight or less relative to the resin.

Rubber particles may be added to the acrylic resin. Here, it is possible to use, as rubber particles, acrylic rubber particles, butadiene-based rubber particles, styrene-butadiene-based rubber particles, and the like. Of these, acrylic rubber particles are preferably used in view of weatherability and durability.

Acrylic rubber particles are particles containing, as a rubber component, an elastic polymer composed mainly of an acrylic acid ester, and may be either particles having a single layer structure composed mainly of this elastic polymer, or particles having a multilayer structure including a layer of this elastic polymer and a layer of a polymer composed mainly of a methacrylic acid ester. In view of surface hardness of a shaped resin sheet made of an acrylic resin, particles having a multilayer structure are preferable.

This elastic polymer may be either a homopolymer of an acrylic acid ester, or a copolymer of 50% by weight or more of an acrylic acid ester and 50% by weight or less of a monomer other than the acrylic acid ester. Here, an alkyl ester of acrylic acid is usually used as the acrylic acid ester.

Preferable monomer composition of the elastic polymer composed mainly of an acrylic acid ester comprises 50% by weight or more and 99.9% by weight or less of an alkyl acrylate, 0% by weight or more and 49.9% by weight or less of an alkyl methacrylate, 0% by weight or more and 49.9% by weight or less of a monofunctional monomer other than the alkyl acrylate and the alkyl methacrylate, and 0.1% by weight or more and 10% by weight or less of a polyfunctional monomer, based on the entire monomers.

Here, examples of the alkyl acrylate in the elastic polymer are the same as those of the alkyl acrylate mentioned above as the monomer component of the methacrylic resin, and the carbon number of the alkyl group is usually 1 to 8, and preferably 4 to 8.

Examples of the alkyl methacrylate in the elastic polymer are the same as those of the alkyl methacrylate mentioned above as the monomer component of the methacrylic resin, and the carbon number of the alkyl group is usually 1 to 8, and preferably 1 to 4.

Examples of the monofunctional monomer other than the alkyl acrylate and the alkyl methacrylate in the elastic polymer are the same as those of the monofunctional monomer other than the alkyl acrylate and the alkyl methacrylate mentioned above as the monomer component of methacrylic acid. Of these, styrene-based monomers such as styrene, α-methylstyrene, and vinyltoluene are preferably used.

Examples of the polyfunctional monomer in the elastic polymer are the same as those of the polyfunctional monomer mentioned above as the monomer component of the methacrylic resin. Of these, an alkenyl ester of an unsaturated carboxylic acid and a polyalkenyl ester of a polybasic acid are preferably used.

Two or more of alkyl acrylates, alkyl methacrylates, monofunctional monomers other than alkyl acrylates and alkyl methacrylates, and polyfunctional monomers in the elastic polymer may be optionally used, respectively.

When acrylic rubber particles having a multilayer structure are used, preferred examples thereof include those having a layer of a polymer composed mainly of a methacrylic acid ester on the outside of the layer of the elastic polymer composed mainly of an acrylic acid ester, namely, those having at least two-layer structure, which include an elastic polymer composed mainly of an acrylic acid ester as an inner layer and a polymer composed mainly of a methacrylic acid ester as an outer layer. Here, an alkyl methacrylate is usually used as the methacrylic acid ester which is a monomer component of the polymer of the outer layer.

It is desired that the polymer of the outer layer is formed in the proportion of usually 10 parts by weight or more and 400 parts by weight or less, and preferably 20 parts by weight or more and 200 parts by weight or less, based on 100 parts by weight of the elastic polymer of the inner layer. When the polymer of the outer layer is formed in the proportion of 10 parts by weight or more based on 100 parts by weight of the elastic polymer of the inner layer, aggregation of the elastic polymer hardly occurs leading to satisfactory transparency of a shaped resin sheet made of an acrylic resin.

Preferable monomer composition of the polymer of the outer layer comprises 50% by weight or more and 100% by weight or less of an alkyl methacrylate, 0% by weight or more and 50% by weight or less of an alkyl acrylate, 0% by weight or more and 50% by weight or less of a monofunctional monomer other than the alkyl methacrylate and the alkyl acryate, and 0% by weight or more and 10% by weight or less of a polyfunctional monomer, based on the entire monomers.

Examples of the alkyl methacrylate in the polymer of the outer layer are the same as those of the alkyl methacrylate mentioned above as the monomer component of the methacrylic resin, and the carbon number of the alkyl group is usually 1 to 8, and preferably 1 to 4. Of these, methyl methacrylate is preferably used.

Examples of the alkyl acrylate in the polymer of the outer layer are the same as those of the alkyl acrylate mentioned above as the monomer component of the methacrylic resin, and the carbon number of the alkyl group is usually 1 to 8, and preferably 1 to 4.

Examples of the monomer other than the alkyl methacrylate and the alkyl acrylate in the polymer of the outer layer are the same as those of the monofunctional monomer other than the alkyl methacrylate and the alkyl acrylate mentioned above as the monomer component of the methacrylic resin. Examples of the polyfunctional monomer are the same as those of the polyfunctional monomer mentioned above as the monomer component of the methacrylic resin.

Two or more of alkyl methacrylates, alkyl acrylates, monomers other than alkyl acrylates and alkyl methacrylates, and polyfunctional monomers in the polymer of the outer layer may be optionally used, respectively.

Preferred examples of acrylic rubber particles having a multilayer structure include those further having a layer of a polymer composed mainly of a methacrylic acid ester on the inside of the layer of the elastic polymer composed mainly of an acrylic acid ester, which is an inner layer of the above two-layer structure, namely, those having at least three-layer structure, which include a polymer composed mainly of this methacrylic acid ester as an inner layer, an elastic polymer composed mainly of the acrylic acid ester as an intermediate layer, and a polymer composed mainly of the methacrylic acid ester as an outer layer. Here, an alkyl methacrylate is usually used as the methacrylic acid ester which is a monomer component of the polymer of the inner layer. It is desired that the polymer of the inner layer is formed in the proportion of usually 10 parts by weight or more and 400 parts by weight or less, and preferably 20 parts by weight or more and 200 parts by weight or less, based on 100 parts by weight of the elastic polymer of the intermediate layer.

Preferable monomer composition of the polymer of the inner layer comprises 70% by weight or more and 100% by weight or less of an alkyl methacrylate, 0% by weight or more and 30% by weight or less of an alkyl acrylate, 0% by weight or more and 30% by weight or less of a monofunctional monomer other than the alkyl methacrylate and the alkyl acryate, and 0% by weight or more and 10% by weight or less of a polyfunctional monomer, based on the entire monomers.

Examples of the alkyl methacrylate in the polymer of the inner layer are the same as those of the alkyl methacrylate mentioned above as the monomer component of the methacrylic resin, and the carbon number of the alkyl group is usually 1 to 8, and preferably 1 to 4. Of these, methyl methacrylate is preferably used.

Examples of the alkyl acrylate in the polymer of the inner layer are the same as those of the alkyl acrylate mentioned above as the monomer component of the methacrylic resin, and the carbon number of the alkyl group is usually 1 to 8, and preferably 1 to 4.

Examples of the monomer other than the alkyl methacrylate and the alkyl acrylate in the polymer of the inner layer are the same as those of the monofunctional monomer other than the alkyl methacrylate and the alkyl acrylate mentioned above as the monomer component of the methacrylic resin. Examples of the polyfunctional monomer are the same as those of the polyfunctional monomer mentioned above as the monomer component of the methacrylic resin.

Two or more of alkyl methacrylates, alkyl acrylates, monofunctional monomers other than alkyl methacrylates and alkyl acrylates, and polyfunctional monomers in the polymer of the inner layer may be optionally used, respectively.

Acrylic rubber particles can be prepared by polymerizing the monomer component of the above-mentioned elastic polymer composed mainly of an acrylic acid ester through at least one-stage reaction using an emulsion polymerization method, or the like. In that case, as mentioned above, when a layer of a polymer composed mainly of a methacrylic acid ester is formed on the outside of a layer of the elastic polymer, the monomer component of the polymer of this outer layer is grafted with the elastic polymer by polymerizing through at least one-stage reaction in the presence of the elastic polymer using an emulsion polymerization method, or the like.

As mentioned above, when a layer of a polymer composed mainly of a methacrylic acid ester is further formed on the inside of the layer of the elastic polymer, first, the monomer component of the polymer of this inner layer is polymerized through at least one-stage reaction using an emulsion polymerization method, or the like, and then the monomer component of the elastic polymer is grafted with the polymer of the inner layer by polymerizing through at least one-stage reaction in the presence of the obtained polymer using an emulsion polymerization method, or the like. Further, the monomer component of the outer layer is grafted with the elastic polymer by polymerizing through at least one-stage reaction in the presence of the obtained elastic polymer using an emulsion polymerization method, or the like. When the polymerization of each layer is performed in two or more stages, it is desired that not the monomer composition of each stage, but the whole monomer composition falls within a predetermined range.

Regarding the particle diameter of acrylic rubber particles, the average particle diameter of the layer of the elastic polymer composed mainly of the acrylic acid ester in the rubber particles is preferably 0.01 $\mu$m or more and 0.4 $\mu$m or less, more preferably 0.05 $\mu$m or more and 0.3 $\mu$m or less, and still more preferably 0.07 $\mu$m or more and 0.25 $\mu$m or less. It is not preferred that the average particle diameter of the layer of this elastic polymer of more than 0.4 $\mu$m may cause deterioration of transparency of a resin sheet made of an acrylic resin, leading to a decrease in transmittance. It is not also preferred that the average particle diameter of the layer of this elastic polymer of less than 0.01 $\mu$m may cause a decrease in surface hardness of a resin sheet, leading to ease of scratching.

The average particle diameter can be determined as follows : acrylic rubber particles are mixed with a methacrylic resin and the mixture is formed into a film, and then a cross section of a layer of the elastic polymer is stained with ruthenium oxide and the average particle diameter is determined from a diameter of a stained portion observed by an electron microscope.

In other words, when acrylic rubber particles are mixed with a methacrylic resin and a cross section thereof is stained with ruthenium oxide, the methacrylic resin as a matrix phase is not stained. When a layer of a polymer composed mainly of a methacrylic acid ester exists on the outside of the layer of the elastic polymer, the polymer of this outer layer is not also stained and only the layer of the elastic polymer is stained, thus making it possible to determine the particle diameter from the diameter of the thus stained portion which is observed in an approximately circular shape using an electron microscope. When a layer of a polymer composed mainly of a methacrylic acid ester exists on the inside of the layer of the elastic polymer, a polymer of this inner layer is not also stained and an observation is made in a state of a two-layer structure in which the layer of the elastic polymer on the outside thereof is stained. In this case, it would be appropriate to determine from the outside of the two-layer structure, namely, an outer diameter of the layer of the elastic polymer.

Regarding a ratio of the content of rubber particles to that of the acrylic resin, rubber particles usually account for 40% by weight or less, and preferably 30% by weight or less, of the entire acrylic resin. If rubber particles account for more than 40% by weight of the entire acrylic resin, surface hardness of a shaped resin sheet decreases, leading to ease of scratching.

The projection is a triangular projection whose cross-sectional shape is triangular, from the viewpoint of restraining incidence of sunlight into a room in summer and not restraining incidence of sunlight into a room in winter, and more particularly a triangular projection which is a line of a triangular projection extending linearly between opposite sides of the shaped resin sheet 1, wherein an orthogonal cross section of the line the triangular projection which appears when the line of the triangular projection is cut along the direction orthogonal to the longitudinal direction has a triangle shape. The vertical angle of the triangle may be an arc having a curvature. As used herein, "triangle" includes both a triangle in which each of vertical angles is an acute angle, and a triangle in which at least one of vertical angles is an arc having a curvature. The projection in the shaped resin sheet 1 shown in Figs. 1 to 4 is a triangular projection whose cross-sectional shape is triangular, each vertical angle of the triangle being an acute angle, but is not limited thereto, and the projection may also be a triangular projection whose cross-sectional shape is triangular, at least one of vertical angles of the triangle being an arc having a curvature. When the light-modulating member is used as a member for window in an upright posture, namely, a vertical posture, it is preferred that the projecting line lineally extends in a direction orthogonal to a vertical direction (lateral direction) . In embodiments shown in Fig. 1 to Fig. 4, in addition to the projection of the shaped resin sheet 1, the valley portion also has an acute angle, and this valley portion may also be an arc having a curvature.

In the triangle, when a straight line connecting both ends of the bottom is defined as the base of a triangle, from the viewpoint of restraining incidence of sunlight into a room in summer and not restraining incidence of sunlight into a room in winter, among base angles 2 of the triangle, one base angle 2a (hereinafter sometimes referred to as a first base angle 2a) is 1° or more and 40° or less. Although stripes are sometimes visually recognized in appearance of the light-modulating member (i.e. a surface which faces a surface having a projection), from the viewpoint of restraining visual recognition of the stripes, as shown in Fig. 2, among base angles 2 of the triangle, a second base angle 2b (hereinafter sometimes referred to as a second base angle 2b) is 90°. The first base angle 2a is appropriately determined, taking the below-mentioned technical matter into consideration, and 1° or more and 40° or less.

The height (H) of the projection is 1 $\mu$m or more and 1 cm or less, and preferably 5 $\mu$m or more and 1 cm or less. When the height (H) of the projection is less than 1 $\mu$m, the formation of a projection on a surface of a resin sheet may become difficult, and when the height is more than 1 cm, a thickness of the light-modulating member may become too thick. The pitch interval (P) as a distance between vertices of the projection is 10 $\mu$m or more and 10 cm or less, and more preferably 50 $\mu$m or more and 10 cm or less. When the pitch interval (P) is less than 10 $\mu$m, the formation of a projection on a surface of a resin sheet may become difficult, and when the height is more than 10 cm, the thickness of the light-modulating member may become too thick.

When the height (H) of the projection is 1 $\mu$m or more and 1 cm or less and also the pitch interval (P) of the projection is 10 $\mu$m or more and 10 cm or less, it becomes easy to form a projection on one surface of the shaped resin sheet 1, thus making it possible to produce a shaped resin sheet 1 in a simple manner and to supress an excessive increase in thickness of the light-modulating member. The light-modulating membercomprising one or plural shaped resin sheets 1 having a projection on one surface restrains incidence of sunlight into a room in summer and does not restrain incidence of sunlight into a room in winter, and is also easily used as a member for window since it is easy to produce the shaped resin sheet 1 as a constituent member and a thickness thereof is restrained.

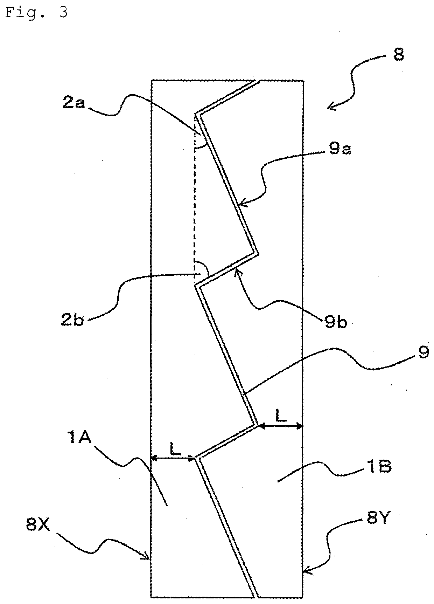

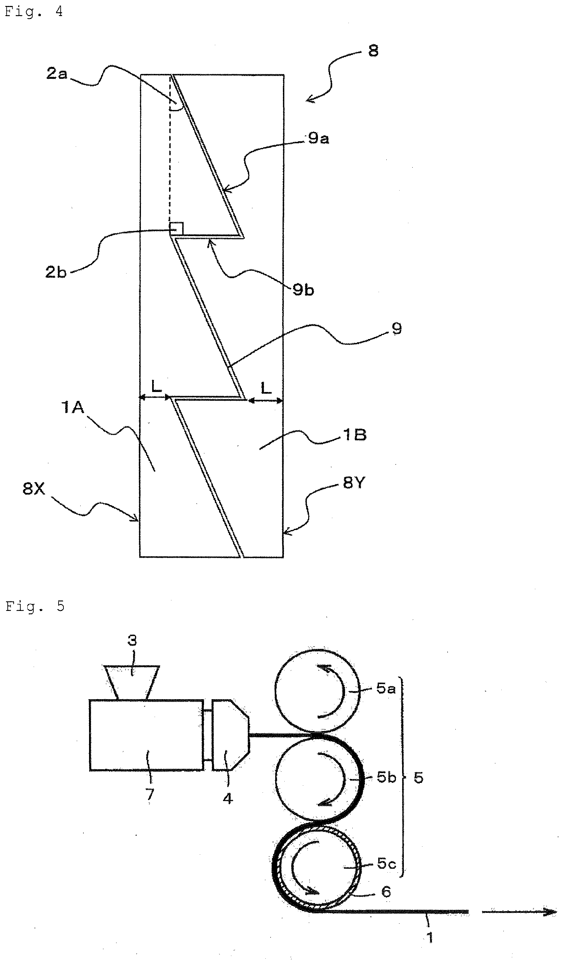

The thickness of the shaped resin sheet 1 is preferably 1 $\mu$m or more and 10 cm or less, and more preferably 10 $\mu$m or more and 1 cm or less. When the thickness is less than 1 $\mu$m, breakage may occur, and when the thickness is more than 10 cm, its weight may increase, leading to making a shaped resin sheet unfavorable as a member for window. As used herein, the thickness of the shaped resin sheet means a distance from a surface facing a surface having projections to the bottom of the projection and, for example, the thickness corresponds to L in Fig. 3 and Fig. 4.

The shaped resin sheet 1 of the present invention is transparent when visually observed. As an indicator of transparency, when the thickness of the shaped resin sheet 1 of the present invention is 3 mm, a total light transmittance of the shaped resin sheet 1 measured in accordance with JIS K7361-1 is 80% or more, and more preferably 90% or more.

As another indicator of transparency, Haze of the shaped resin sheet 1 measured in accordance with JIS K7136 is preferably 10% or less, and more preferably 5% or less.

The method for producing a shaped resin sheet 1 of the present invention is not particularly limited as long as it is a method capable of producing a shaped resin sheet having a predetermined projection on one surface using the above-mentioned resin as a raw resin, and examples thereof include a method of cutting a flat sheet, a melt extrusion molding method, a press molding method, an injection molding method, a cast polymerization method, and the like. Among these, a melt extrusion molding method, a press molding method, an injection molding method, and a cast polymerization method are preferable, and a melt extrusion molding method and a press forming method are more preferable.

(Melt Extrusion Molding Method)

A method for producing a shaped resin sheet using a melt extrusion molding method includes, for example, a sheet-like article extrusion step of continuously extruding a raw resin in a heated and molten state into a sheet form through a die, a first pressing step of interposing a sheet-like article between a first press roll and a second press roll, a conveying step of conveying the sheet-like article contacting closely with the second press roll, and a second pressing step (shaping step) of interposing the conveyed sheet-like article between the second press roll and a third press roll (shaping roll). According to this production method, since a projected shape is imparted to one surface of a resin sheet in the process for forming a shaped resin sheet, secondary processing for forming a projected shape on one surface of a resin sheet is not needed, resulting in continuously obtaining a shaped resin sheet in a simple manner.

(Press Molding Method)

According to a method for producing a shaped resin sheet using a press molding method, for example, a sheet or pellets made of a raw resin is/are melt-plasticized, followed by pressing between molds and further cooling. Thus, a shaped resin sheet was obtained as a molded body.

(Injection Molding Method)

According to a method for producing a shaped resin sheet using an injection molding method, for example, using an injection molding machine including a clamping unit and an injection unit as well as molds for forming into a desired shaped resin sheet, a raw resin converted into a heated and molten state is injected into the molds, followed by solidification by cooling. Thus, a shaped resin sheet was obtained as a molded body.

(Cast Polymerization Method)

Examples of the method for producing a shaped resin sheet using a cast polymerization method include a cell casting method in which a polymer (raw resin) is injected into a cell and then polymerized, or a continuous casting method using a pair of endless belts facing each other, and the like. The cell used in the cell casting method is composed of sealing materials such as two glass sheets and a soft vinyl chloride tube, and a distance between cells is appropriately adjusted so as to obtain a shaped resin sheet having a desired thickness. Examples of the method for producing a shaped resin sheet include, in addition to a bulk polymerization method such as a cast polymerization method, suspension polymerization, emulsion polymerization, and dispersion polymerization methods. Among these, a bulk polymerization method such as a cast polymerization method is preferable in view of the achievement of satisfactory appearance and productivity of a large-size sheet.

A method of and an apparatus for producing a shaped resin sheet 1 of the present invention will be described in detail below with reference to Fig. 5.

<Production Apparatus of Shaped Resin Sheet>

A production apparatus used in the method for producing a shaped resin sheet of the present invention includes, for example, a die through which a resin in a heated and molten state is continuously extruded to obtain a sheet-like article; press rolls; and a shaping roll for imparting a shape to a surface of the sheet-like article by interposing the sheet-like article between the press rolls. Fig. 5 is an outline schematic view of a production apparatus used in a method for producing a shaped resin sheet according to one embodiment of the present invention. The apparatus shown in Fig. 5 includes a die 4 through which a resin in a heated and molten state is continuously extruded to obtain a sheet-like article; and a press roll 5. The press roll 5 consists of a first press roll 5a for extruding a sheet-like article; a second press roll 5b; and a third press roll 5c; and also includes a transfer mold 6 on a surface of the third press roll 5c. The sheet-like article is interposed between the second press roll 5b and the third press roll 5c equipped with the transfer mold 6, thus making it possible to obtain a shaped resin sheet imparted with a desired surface shape.

It is also possible to be provided with, in addition to the press roll 5, a roll which has no technical relationship with the present invention. Such roll is in contact with a sheet-like article, and examples thereof include a guide roll (touch roll) for conveying the sheet-like article to the first press roll, and a touch roll for making the sheet-like article to be in contact with the second press roll.

<Method for Producing Shaped Resin Sheet>

A method for producing a shaped resin sheet of the present invention includes, for example, a sheet-like article extrusion step of continuously extruding a raw resin in a heated and molten state into a sheet form through a die, a pressing step of interposing the sheet-like article between a first press roll and a second press roll, a conveying step of conveying the sheet-like article contacting closely with the second press roll, and a shaping step of interposing the conveyed sheet-like article between the second press roll and a shaping roll. According to this production method, since a projected shape is imparted to a surface of a resin sheet in the process for forming a shaped resin sheet, secondary processing for forming a projected shape to a surface of a resin sheet is not needed, thus obtaining a shaped resin sheet in a simple manner.

<Sheet-Like Article Extrusion Step>

In the sheet-like article extrusion step, a resin is continuously extruded through a die in a heated and molten state to produce a sheet-like article.

It is possible to use, as the resin used in the production method of the present invention, thermoplastic resins mentioned in the shaped resin sheet. Among these, an acrylic resin is preferably used.

To the resin, additives such as ultraviolet absorbers, thermal stabilizers, antistatic agents, and light diffusing agents may be added.

It is possible to usually use, as the die through which the resin is continuously extruded in a heated and molten state, the same T-die made of metal as that used in an extrusion molding method. In order to extrude a resin through a die in a heated and molten state, an extruder is used similarly to a conventional extrusion molding method. The extruder may be either a single screw extruder or a twin screw extruder. The resin is heated in the extruder and conveyed to a die in a molten state, and then extruded. The resin extruded through the die is continuously extruded as a sheet-like article.

The sheet-like article may be either a single layer, or a multilayer with two or more layers. When the sheet-like article is a single layer, in the case of extruding a resin through a die in a heated and molten state, one resin is fed to the die and then extruded. In the case of a multilayer with two or more layers, two or more resins are fed to the die and then co-extruded in a state of being laminated. In order to co-extrude two or more resins in a state of being laminated, for example, using a known two-material and three-layer distribution type feed block, resins are fed to the die via the feed bock.

<First Pressing Step>

The sheet-like article obtained in the sheet-like article extrusion step is simultaneously interposed between a first press roll 5a and a second press roll 5b in the first pressing step, as shown in Fig. 2. A metal roll made of metal such as stainless steel or steel is usually used as a first press roll and a second press roll, and the diameter of the roll is usually 100 mm or more and 500 mm or less. When the roll made of metal is used as these first and second press rolls, a surface of the roll may be subjected to a treatment of plating such as chromium plating, copper plating, nickel plating, or nickel-phosphorus plating. The surface of the press roll may be either a mirror surface, or a transfer surface subjected to roughening such as embossing if there is no need to transfer with high accuracy.

<Conveying Step>

The conveying step is a step of conveying a sheet-like article contacting closely with a second press roll according to the rotation of the second press roll.
In the first pressing step and the conveying step, cooling due to contact with the press roll and cooling due to contact with outside air lowers the temperature of the sheet-like article than the temperature in a heated and molten state after extrusion through the die. In a state where the temperature became lower than that in a heated and molten state, the sheet-like article is conveyed and subjected to the subsequent second pressing step. It is desired that the press roll has a temperature control function and is capable of being controlled to the desired temperature.

<Second Pressing Step>

In the second pressing step, the conveyed sheet-like article is pressed by interposing between a second press roll 5b and a third press roll 5c, as shown in Fig. 2. In this second pressing step, a surface shape is imparted to the sheet-like article by a transfer mold 6 provided on a surface of the third press roll 5c. In the present invention, the third press roll provided with the transfer mold is also referred to as a shaping roll. The transfer mold provided on a surface of the shaping roll is pressed against a surface of the sheet-like article and thus the shape is imparted to the sheet-like article using the surface shape as an inverse form.
In this second pressing step, the sheet-like article is pressed again between the second press roll and the shaping roll, peeled from the second press roll, brought into close contact with the shaping roll, and then conveyed according to the rotation of the shaping roll. In that case, the sheet-like article has a high surface temperature and, when the sheet-like article is sufficiently brought into close contact with the shaping roll without pressing between the second press roll and the shaping roll, the space between the second press roll and the shaping roll may be slightly larger than the thickness of the sheet-like article. The sheet-like article conveyed by the rotation of the shaping roll is peeled from the shaping roll, thus obtaining a shaped resin sheet.
The transfer mold 6 having plural recesses provided on a surface of the shaping roll and the shape of the recess is preferably an inverse form of a cross-sectional shape of the projection on a surface of the obtained shaped resin sheet. When the cross-sectional shape of the projection is a triangle, the recess is preferably a V-shaped groove which is approximately the same as the shape of the triangle.
When a distance between vertices of the adjacent recess is defined as a pitch interval (P) and a distance from the circumference of a surface of the shaping roll to the apex of the recess is defined as a groove depth (H), the pitch interval (P) is 10 $\mu$m or more and 10 cm or less and the groove depth (H) is 1 $\mu$m or more and 1 cm or less.
The method for producing a transfer mold includes, but is not limited to, a method in which a surface of the shaping roll made of stainless steel or steel is subjected to a treatment of plating such as chromium plating, copper plating, nickel plating, or nickel-phosphorus plating, and then the plated surface may be subjected to shaping by removing processing using a diamond bite or sharpening steel, laser processing, or chemical etching.
After formation of the transfer mold, the surface of the shaping roll may be subjected to a treatment of plating such as chromium plating, copper plating, nickel plating, or nickel-phosphorus plating as long as accuracy of the surface shape is not deteriorated.
In the second pressing step, the objective shaped resin sheet can be produced by imparting a surface shape (transfer mold) of the shaping roll to the sheet-like article. The obtained shaped resin sheet is usually cooled, cut into a plurality of pieces, and then used in a light-modulating member.
According to the production method of the present invention, the sheet-like article extruded through a die may be shaped by interposing between a shaping roll and a second press roll, using a first press roll as a shaping roll in place of a third press roll, or by interposing the sheet-like article extruded through a die between a shaping roll and a first press roll, using a second press roll as a shaping roll.

<Light-Modulating Member>

The light-modulating member of the present invention composed of one or plural shaped resin sheets obtained by the production method, and preferably produced by arranging a pair of shaped resin sheets via an air layer so that surfaces having projections face each other. A schematic view of a cross sectional view of a light-modulating member according to one embodiment of the present invention is shown in Fig. 3. A schematic view of a cross sectional view of a light-modulating member according to another embodiment of the present invention is shown in Fig. 4. Both shaped resin sheets 1A and 1B in Fig. 3 are identical to a shaped resin sheet 1 in Fig. 1. Both shaped resin sheets 1A and 1B in Fig. 4 are identical to a shaped resin sheet 1 in Fig. 2.

An air layer 9 means a space between shaped surfaces of a pair of shaped resin sheets 1A and 1B. In a light-modulating member of one embodiment shown in Fig. 3, a right downward slope 9a and a left downward slope 9b are repeatedly arranged. In a light-modulating member of another embodiment shown in Fig. 4, a right downward slope 9a and a horizontal plane 9b are repeatedly arranged. In the present embodiment, while a pair of shaped resin sheets 1A and 1B are arranged via an air layer 9, the light-modulating member of the present invention is not limited thereto and a pair of shaped resin sheets 1A and 1B may be partially or entirely laminated to each other by an adhesive or a cohesive. In the light-modulating member of the present invention, the air layer may be filled with the cohesive or adhesive and, for example, the air layer 9 shown in Fig. 3 and Fig. 4 may be filled with the cohesive or adhesive. When a pair of shaped resin sheets are laminated to each other by the cohesive or adhesive, as long as two shaped resin sheets can be fixed, filling with the adhesive may be performed at the entire surface having a projection, or may be either the periphery or part thereof. A commercially available agent can be used as the cohesive or adhesive.

When a pair of shaped resin sheets are arranged to make the shaped surface faces to each other, the projection facing each other are preferably point symmetrically related to each other. For example, when the cross-sectional shape is a triangle, triangles facing each other are preferably point symmetrically related to each other with the center of one hypotenuse of the triangle as the center of symmetry. Thus, the air layer maintains a certain intervals. When a pair of shaped resin sheets are arranged to make the projection facing each other be point symmetrically related to each other, in other words, a pair of shaped resin sheets are arranged to make the projection of one shaped resin sheet and the recesse of the other shaped resin sheet be laid one upon another, a pair of shaped resin sheets are partially or entirely laminated to each other by an adhesive or a cohesive.

A light-modulating member 8 of the present invention has a plane 8X on one surface and also has a plane 8Y on the other surface, and the plane 8X and the plane 8Y are in parallel with each other. A refractive index of a resin is usually within a range of 1.3 or more and 1.7 or less, and a light transmittance thereof is usually about 90%. For example, an acrylic resin has a refractive index of about 1.5, and a light transmittance of 92% or more and 93% or less. The light-modulating member 8 consists of a right downward slope 9a inclined at an angle 2a to the plane 8X and a left downward slope 9b inclined at an angle 2b to the plane 8Y, and has an air layer 9 having a certain thickness. An inclination angle 2a (i.e. first base angle 2a of triangular projection of shaped resin sheet) of the air layer 9 can be set taking the below-mentioned technical matter into consideration.

Here, a description will be made by way of the case where a resin of shaped resin sheets 1A and 1B composing the light-modulating member 8 is a resin having a refractive index of 1.5, as an example. In general, when light travels from a medium having a large refractive index (resin) to a medium having a small refractive index (air), in the case of a small incident angle, optical refraction occurs at an interface between the both, and thus a refraction angle becomes larger than an incident angle. In the present case, since the resin has a refractive index of 1.5 and air has a refractive index of 1, if light travels from the resin to an air side, a refraction angle becomes larger than an incident angle. As the incident angle gradually increases, the refraction angle also gradually increases. If the incident angle becomes a certain angle or larger, leading to the case where light does not travel from the resin to the air side, light is totally reflected at the interface between the resin and the air layer. As used herein, this angle is called a critical angle and designated as $\theta m$.

In the present case, the critical angle $\theta m$, air, and resin have the following relation:

$$\sin \theta m = (\text{refractive index of air})/(\text{refractive index of resin}) = 1/1.5.$$

Accordingly, the critical angle $\theta m$ is 41.8°.

For example, when a light-modulating member according to one embodiment of the present invention shown in Fig. 3 is arranged as a light-modulating member for window in the manner where a plane 8X exists at an outdoor side, a base angle 2a exists at an upper side, and a base angle 2b exists at the lower side, if light is incident on the plane 8X from the outdoor side at a small incident angle (an angle formed by light and an perpendicular line of the plane 8X), light refracts in the plane 8X and travels in a shaped resin sheet 1A, and then refracts at an interface between the shaped resin sheet 1A and the air layer 9. Then, light travels in the air layer 9 and refracts at the interface between the air layer 9 and the shaped resin sheet 1B. Thereafter, light travels in the shaped resin sheet 1B and refracts in the plane 8Y, and incident on the indoor side. Here, as shown in Fig. 4, when a second base angle 2b of the triangular projection is set at 90°, it becomes difficult to visually recognize stripes in any cases when viewed a light-modulating member 8 from an outdoor side or an indoor side.

Meanwhile, when light is incident on the plane 8X from the outdoor side at a large incident angle, light refracts in the plane 8X and travels in the shaped resin sheet 1A. Light totally reflects at the interface between the shaped resin sheet 1A and the air layer 9 and does not transmit the air layer 9 and the shaped resin sheet 1B, resulting in shielding the penetration of light into the indoor side. As used herein, when this light is not incident on the indoor side, an angle at which light is incident on the plane 8X from the outdoor side is called a specific angle.

The specific angle varies depending on the inclination angle 2a of the air layer 9. In the case of using, as the resin of shaped resin sheets 1A and 1B composing the light-modulating member 8, a resin having a refractive index of 1.5, the specific angle is 63.9° when the inclination angle 2a of the air layer 9 is 5°, the specific angle is 52.2° when the inclination angle 2a is 10°, and the specific angle is 33.9° when the inclination angle 2a is 20°.

For example, if the inclination angle 2a of an air layer 9 is adjusted to 7°, the specific angle becomes about 60° when the refractive index is 1.5. Light incident from upward at an angle lager than 60°, i.e. 70° from a direction perpendicular to the plane 8X refracts when incident on the plane 8X, and is incident on an oblique air layer 9 at an angle of 45 degree. Since this angle is larger than a critical angle of the interface between the shaped resin sheet 1A and the air layer 9, total reflection occurs and light reflects at the interface. The reflected light reflects in a shaped resin sheet 1A, and transmits neither an air layer 9 nor shaped resin sheet 1B. Meanwhile, light incident at an angle smaller than the specific angle of 60° enters into the air layer 9 from the shaped resin sheet 1A at an angle smaller than a critical angle between the shaped resin sheet 1A and the air layer 9, and thus light refracts without causing total reflection. When light enters into the shaped resin sheet 1B from the air layer 9, reverse refraction occurs and, if the air layer 9 has a small width, light transmits similarly to common glass without substantially exerting an influence of the air layer 9. Therefore, the air layer 9 desirably has a thickness of 2mm or less. The lower limit of the thickness of the air layer 9 is about 0.01 mm from the viewpoint of being capable of exerting the role of the air layer 9. When the thickness of the air layer 9 is within the above range, an outside view can be seen like conventional glass when viewed the outdoor from the indoor. It is understood that the inclination angle can be more decreased when using a resin having a large refractive index.

When using a light-modulating member 8 in which a resin of shaped resin sheets 1A and 1B composing the light-modulating member 8 has a refractive index of 1.5 and an air layer 9 has an inclination angle 2a (first base angle 2a of triangular projection of shaped resin sheet) of 7° in an upright posture as shown in Fig. 3 in a south window in Tokyo, incidence of sunlight into an indoor side is restrained when a solar altitude is high and an angle of incidence of light into a plane 8X from the outdoor side is more than 60°, namely, during April through September, while incidence of sunlight into an indoor side is not restrained when a solar altitude is low and an angle of incidence of light into a plane 8X from the outdoor side is less than 60°, namely, during October through March. As used herein, summer means a period from April through September and winter means a period from October through March. In order to restrain incidence of sunlight into an indoor side in summer and not to restrain incidence of sunlight into an indoor side in winter in the place other than Tokyo, solar altitude depends on latitude, and thus an inclination angle 2a may be appropriately set depending on the latitude of the place where the light-modulating member 8 is arranged. The inclination angle 2a may be set at an angle larger than 7° in the place where the latitude is larger than that in Tokyo, whereas, the inclination angle 2a may be set at an angle smaller than 7° in the place where the latitude is smaller than that in Tokyo. In order to set the inclination angle 2a, the first base angle 2a of a triangular projection of the shaped resin sheet may be set.

When such light-modulating member 8 is used for a window pane made of a resin as a member for window or attached to a window pane, incidence of sunlight into a room in summer is restrained and incidence of sunlight into a room in winter is not restrained. Also, the outside view can be visually recognized, clearly.

Therefore, when using the light-modulating member 8 having such structure, incidence of sunlight into an indoor side can be restrained when the solar altitude is higher than a specific angle. Moreover, since light incident from the lower solar altitude transmits in the same manner as the case where sunlight transmits a conventional glass, thus making it possible to see an outside view in the same manner as in the case of a usual glass pane.

In the light-modulating member of the present invention, the outer periphery of a pair of shaped resin sheets is preferably surrounded by a frame member. When the outer periphery of the light-modulating member is surrounded by a frame member, it is easy to maintain the thickness of an air layer between a pair of shaped resin sheets at a given value, and thus it becomes easy to arrange to a building material when using as a member for window. Even if the light-modulating member of the present invention is produced by arranging one shaped resin sheet, the outer periphery of this light-modulating member is preferably surrounded by a frame member. Thus, when the outer periphery is surrounded by a frame member, it becomes easy to arrange to a building material when using as a member for window.

When the light-modulating member is used as a member for window, the light-modulating member is usually used in an upright posture, namely, a vertical posture. In this case, it is preferred to arrange a solar power generation panel facing a lower end surface of the light-modulating member. Sunlight incident on the light-modulating member is likely to reflect on the projection of the light-modulating member, leading to concentration of light in the lower side direction of the light-modulating member. Thus, the arrangement of a solar power generation panel facing the lower end surface of the light-modulating member enables efficient power generation. Even if the light-modulating member is produced by arranging one shaped resin sheet, when this light-modulating member is used as a member for window, it is used in a vertical posture. Also in this case, a solar power generation panel is preferably arranged facing the lower end surface of the light-modulating member. It is preferred that the light-modulating member and the solar power generation panel are laminated to each other by an adhesive or a cohesive.

The light-modulating member can be used as a member for window in place of a window pane which is commonly used, but is not limited thereto. For example, the light-modulating member is not particularly limited thereto and may be preferably laminated to the outdoor side or indoor side of the window pane via a cohesive layer, or may be used in combination with a multilayer glass. When the light-modulating member is produced by arranging a piece of a shaped resin sheet, it is preferred to use by laminating to the outdoor side or indoor side of the window pane so that the surface having projections corresponds to the indoor side. A cohesive layer may be provided on one surface of the light-modulating member to give a light-modulating member with a cohesive layer, and this light-modulating member with a cohesive layer may be laminated with the window pane so that a surface of the cohesive layer corresponds to a contact surface. The cohesive layer is provided on one surface of the light-modulating member to give a light-modulating member with a cohesive layer having the cohesive layer on one surface of the light-modulating member, thus making it possible to simply use as a member for window. When the light-modulating member is used in combination with a multilayer glass, the light-modulating member may be arranged between two sheet glasses. At this time, the sheet glass and the light-modulating member may be laminated with each other via a cohesive layer. A commercially available agent can be used as a cohesive composing the cohesive layer.

In still other embodiment, the light-modulating member according to the present invention may be a light-modulating member using a shaped resin sheet, which is different from the shaped resin sheet 1, as long as the effects of the present invention are not deteriorated, and examples thereof include a light-modulating member using a shaped resin sheet in which projections are discontinuously formed on one surface.

## EXAMPLES

The present invention will be specifically described by way of Examples, but the present invention is not limited by these Examples. Example 1 is in accordance with the present invention. Example 2 is not in accordance with the present invention.

(Example 1)

On one surface of a 3 mm thick acrylic resin sheet (SUMIPEX 000, manufactured by Sumitomo Chemical Company, Limited., refractive index (in accordance with JIS K7142): 1.49), projections corresponding to a groove having a right-triangular shape were press-transferred, using a mold with a groove having a right-triangular shape (pitch interval: 1,000 $\mu$m, height: 122 $\mu$m, angle of base angle: 7° and 90°) formed continuously thereon to produce a shaped resin sheet 1 as shown in Fig. 2 in which one surface is an irregular surface having continuous projections and the other surface is a plane surface.

A cross-sectional shape of the projection was a right triangle in which one side of two sides, excluding a hypotenuse, was in parallel to a thickness direction of the shaped resin sheet. The shape of the projection was measured using an optical microscope. As a result, it was a right triangle in which a pitch interval is 1,000 $\mu$m, a height is 122 $\mu$m, an angle of a first base angle 2a is 7°, and an angle of a second base angle 2b is 90°.

(Example 2)

On one surface of a 3 mm thick acrylic resin sheet (SUMIPEX 000, manufactured by Sumitomo Chemical Company, Limited., refractive index (in accordance with JIS K7142): 1.49), projections corresponding to a groove having a right-triangular shape were press-transferred, using a mold with a groove having a right-triangular shape (pitch interval: 1,000 $\mu$m, height: 107 $\mu$m, angle of base angle: 7° and 40°) formed continuously thereon to produce a shaped resin sheet 1 in which one surface is an irregular surface having continuous projections and the other surface is a plane surface.

The shape of the projection was measured using an optical microscope. As a result, it was a right triangle in which a pitch interval is 1,000 $\mu$m, a height is 122 $\mu$m, an angle of a first base angle 2a is 7°, and an angle of a second base angle 2b was 40°.

<Evaluation>

With respect to the respective shaped resin sheets obtained in Example 1 and Example 2, the following evaluations were carried out.

(Appearance Evaluation)

Specimens of 7 cm☐ were cut from the obtained shaped resin sheet. After allowing surfaces each having projections of the obtained two specimens to face each other, a 40 μm thick adhesive was provided on the periphery and two specimens were laid one upon another at intervals of 40 μm so that irregularities face each other, and then appearance of the plane facing the surface having projections was visually evaluated. The shaped resin sheet was arranged as shown in Fig. 3 or Fig. 4, and then appearance of the plane facing the surface having projections was evaluated from a plane 8Y side. The case where no stripe was visually recognized was rated "Good", whereas, the case where stripes were visually recognized was rated "Bad". The evaluation results are shown in Table 1.

(Total Light Transmittance)

Using Haze Meter [HN150] manufactured by MURAKAMI COLOR RESEARCH LABORATORY, a total light transmittance was measured. Specimens of 7 cm☐ were cut from the obtained shaped resin sheet. A 40 μm thick adhesive was provided on the periphery and a measurement was made in a state where two specimens were laid one upon another at intervals of 40 μm so that irregularities of the obtained two specimens are laid one upon another. The shaped resin sheet was arranged as shown in Fig. 2 and a plane 8X was arranged at a light source lamp side, followed by the measurement. The measurement results are shown in Table 1.

(Shielding Performance Test)

Shielding performance of light at each of incident angles +30° and +60° was evaluated. Using Goniophotometer manufactured by MURAKAMI COLOR RESEARCH LABORATORY, the amount of transmitted light at each of incident angles of 0°, +30°, and +60° was measured, followed by calculation of each ratio of an amount of transmitted light at an incident angle of +30° and an amount of transmitted light at an incident angle +60° to an amount of transmitted light at an incident angle 0° (amount of transmitted light at an incident angle of 30°/amount of transmitted light at an incident angle of 0°, amount of transmitted light at an incident angle of 60° /amount of transmitted light at an incident angle of 0°) from the obtained value. Specimens of 7 cm☐ were cut from the obtained shaped resin sheet. A 40 μm thick adhesive was provided on the periphery of the specimen and a measurement was made in a state where two specimens were laid one upon another at intervals of 40 μm so that irregularities of two specimens face each other. The shaped resin sheet was arranged as shown in Fig. 3 or Fig. 4 and light was incident from a plane 8X side, followed by the measurement. The calculated results are shown in Table 1. An incident angle 0° means that light was incident from a direction in parallel to a thickness direction (hereinafter, thickness direction) of a sample of the shaped resin sheet, while an incident angle +30° means that light was incident from upward at 30° to the thickness direction. The amount of transmitted light (%) of each sample is the value obtained as follows. The amount of light obtained by measuring without using a sample is defined as 100% of the amount of transmitted light, and then a ratio of the amount of light measured using the sample to the assumed amount of light was calculated.

[Table 1]

| | Appearance evaluation by visual observation | Whole light transmittance | Shielding performance test | | | | |
|---|---|---|---|---|---|---|---|
| | | | Amount of transmitted light at each incident angle | | | Shielding performance at each incident angle | |
| | | | 0° | +30° | +60° | +30° *1 | +60° *2 |
| | | (%) | (%) | (%) | (%) | (%) | (%) |
| Example 1 | Good | 84.5 | 72.1 | 64.5 | 0.12 | 89.5 | 0.17 |

(continued)

| | Appearance evaluation by visual observation | Whole light transmittance | Shielding performance test | | | | |
|---|---|---|---|---|---|---|---|
| | | | Amount of transmitted light at each incident angle | | | Shielding performance at each incident angle | |
| | | | 0° | +30° | +60° | +30° *1 | +60° *2 |
| | | (%) | (%) | (%) | (%) | (%) | (%) |
| Example 2 | Bad | 73.6 | 61.2 | 59.6 | 0.11 | 97.4 | 0.18 |
| *1: (Amount of transmitted light at incident angle + 30°/amount of transmitted light at incident angle + 0°) × 100 (%) *2: (Amount of transmitted light at incident angle + 60°/amount of transmitted light at incident angle + 0°) × 100 (%) | | | | | | | |

**Reference Signs List**

1: Shaped resin sheet, 2: Base angle, 3: Resin charge port, 4: Die, 5: Press roll, 6: Transfer mold, 7: Extruder, 8: Light-modulating member, 9: Air layer

**Claims**

1. A light-modulating member comprising one or plural shaped resin sheets (1) having a projection on one surface, wherein the projection has a height (H) of from 1 $\mu$m or more through 1 cm or less and a pitch interval (P) of from 10 $\mu$m or more through 10 cm or less, wherein the projection is a triangular projection which is a line of a triangular projection extending linearly between opposite sides of the shaped resin sheet (1) and whose cross-sectional shape is triangular, wherein, when a straight line connecting both ends of the bottom of the triangular projection is defined as the base of a triangle, one base angle (2a) of the triangle is 90°; **characterised in that**:

    the other base angle (2b) is 1° or more and 40° or less; and
    each shaped resin sheet (1) is transparent, wherein as an indicator of transparency, when the thickness of the shaped resin sheet (1) is 3mm, a total light transmittance of the shaped resin sheet (1) is 80% or more.

2. The light-modulating member according to claim 1, wherein the shaped resin sheet (1) is formed by extrusion molding.

3. The light-modulating member according to claim 1 or 2, which has one shaped resin sheet (1) having a projection on one surface.

4. The light-modulating member according to claim 1 or 2, wherein a pair of shaped resin sheets (1A, 1B) respectively having a projection on one surface are arranged via an air layer (9) and the surfaces having the projections face each other.

5. The light-modulating member according to claim 4, wherein a pair of shaped resin sheets (1A, 1B) respectively having a projection on one surface is laminated to each other with an adhesive or a cohesive.

6. The light-modulating member according to claim 4, wherein opposing projections are arranged such that there is a symmetrical relation with respect to the center of one hypotenuse of a triangle as the center of symmetry.

7. The light-modulating member according to any preceding claim, wherein the outer periphery of the shaped resin sheet (1) is surrounded by a frame member.

8. The light-modulating member according to any preceding claim which is used as a member for window.

9. A light-modulating member with a cohesive layer having a cohesive layer on one surface of the light-modulating member according to any one of claims 1 to 8.

**Patentansprüche**

1. Lichtmodulierendes Element, umfassend eine oder mehrere geformte Harzplatten (1) mit einem Vorsprung an einer Oberfläche, wobei der Vorsprung eine Höhe (H) von 1 μm oder mehr bis 1 cm oder weniger und ein Abstandsintervall (P) von 10 μm oder mehr bis 10 cm oder weniger aufweist, wobei der Vorsprung ein dreieckiger Vorsprung ist, der eine Linie eines dreieckigen Vorsprungs ist, die sich linear zwischen gegenüberliegenden Seiten der geformten Harzplatte (1) erstreckt, und dessen Querschnittsform dreieckig ist, wobei, wenn eine gerade Linie, die beide Enden der Unterseite des dreieckigen Vorsprungs verbindet, als die Basis eines Dreiecks definiert ist, ein Basiswinkel (2a) des Dreiecks 90° ist;

   **dadurch gekennzeichnet, dass**:

   der andere Basiswinkel (2b) 1° oder mehr und 40° oder weniger ist; und
   jede geformte Harzplatte (1) transparent ist, wobei als ein Transparenzindikator, wenn die Dicke der geformten Harzplatte (1) 3 mm ist, eine gesamte Lichtdurchlässigkeit der geformten Harzplatte (1) 80 % oder mehr ist.

2. Lichtmodulierendes Element nach Anspruch 1, wobei die geformte Harzplatte (1) durch Strangpressen geformt ist.

3. Lichtmodulierendes Element nach Anspruch 1 oder 2, das eine geformte Harzplatte (1) mit einem Vorsprung an einer Oberfläche aufweist.

4. Lichtmodulierendes Element nach Anspruch 1 oder 2, wobei ein Paar geformter Harzplatten (1A, 1B) mit jeweils einem Vorsprung an einer Oberfläche über einer Luftschicht (9) angeordnet sind und die Oberflächen mit den Vorsprüngen einander zugewandt sind.

5. Lichtmodulierendes Element nach Anspruch 4, wobei ein Paar geformter Harzplatten (1A, 1B) mit jeweils einem Vorsprung an einer Oberfläche mit einem Klebstoff oder einem kohäsiven Mittel aufeinander laminiert ist.

6. Lichtmodulierendes Element nach Anspruch 4, wobei gegenüberliegende Vorsprünge angeordnet sind, sodass eine symmetrische Beziehung in Bezug auf den Mittelpunkt einer Hypotenuse eines Dreiecks als der Symmetriemittelpunkt vorliegt.

7. Lichtmodulierendes Element nach einem vorhergehenden Anspruch, wobei der Außenumfang der geformten Harzplatte (1) von einem Rahmenelement umgeben ist.

8. Lichtmodulierendes Element nach einem vorhergehenden Anspruch, das als ein Element für Fenster verwendet wird.

9. Lichtmodulierendes Element mit einer kohäsiven Schicht, das eine kohäsive Schicht auf einer Oberfläche des lichtmodulierenden Elements nach einem der Ansprüche 1 bis 8 aufweist.

**Revendications**

1. Élément de modulation de lumière comprenant au moins une feuille moulée en résine (1) présentant une saillie sur une surface, la saillie présentant une hauteur (H) allant de 1 μm ou plus à 1 cm ou moins et un espacement (P) allant de 10 μm ou plus à 10 cm ou moins, la saillie étant une saillie triangulaire qui est une ligne d'une saillie triangulaire s'étendant linéairement entre des côtés opposés de la feuille moulée en résine (1) et dont la forme transversale est triangulaire, lorsqu'une ligne droite reliant les deux extrémités de la partie inférieure de la saillie triangulaire est définie comme base d'un triangle, un angle de base (2a) du triangle étant de 90°;
   **caractérisé en ce que** :

   l'autre angle de base (2b) est de 1° ou plus et de 40° ou moins ; et
   chaque feuille moulée en résine (1) est transparente, en tant qu'indicateur de transparence, lorsque l'épaisseur de la feuille moulée en résine (1) est de 3 mm, une transmittance totale de lumière de la feuille moulée en résine (1) étant de 80 % ou plus.

2. Élément de modulation de lumière selon la revendication 1, dans lequel la feuille moulée en résine (1) est formée par un moulage par extrusion.

**3.** Élément de modulation de lumière selon la revendication 1 ou 2, qui comporte une feuille moulée en résine (1) présentant une saillie sur une surface.

**4.** Élément de modulation de lumière selon la revendication 1 ou 2, dans lequel une paire de feuilles moulées en résine (1A, 1B) présentant respectivement une saillie sur une surface étant disposées dans une couche d'air (9) et les surfaces présentant les saillies se faisant face.

**5.** Élément de modulation de lumière selon la revendication 4, dans lequel une paire de feuilles moulées en résine (1A, 1B) présentant respectivement une saillie sur une surface étant stratifiées l'une sur l'autre avec un adhésif ou une couche cohésive.

**6.** Élément de modulation de lumière selon la revendication 4, dans lequel des saillies opposées sont disposées de manière qu'il existe un rapport symétrique par rapport au centre d'une hypoténuse d'un triangle en tant que centre de symétrie.

**7.** Élément de modulation de lumière selon l'une quelconque des revendications précédentes, dans lequel la périphérie externe de la feuille moulée en résine (1) est entourée d'un élément de cadre.

**8.** Élément de modulation de lumière selon l'une quelconque des revendications précédentes, qui est utilisé comme élément pour une fenêtre.

**9.** Élément de modulation de lumière avec une couche cohésive comportant une couche cohésive sur une surface de l'élément de modulation de lumière selon l'une quelconque des revendications 1 à 8.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011094471 A
- WO 2011096595 A1
- JP 2011042152 A
- JP 2011058349 A
- JP 2010246748 A
- US 2011043919 A1